# EUROPÄISCHE PATENTANMELDUNG

(11) **EP 0 831 002 A1**
(43) Veröffentlichungstag der Anmeldung: **25.03.1998**
(21) Anmeldenummer: 97250266.0
(22) Anmeldetag: 11.09.1997
(51) Int. Cl.: B61D 47/00, B60P 1/64, B65G 63/02

(54) **Vorrichtung zum Horizontal-Umschlag von Lasten**

(30) Priorität: 24.09.1996 DE 19641189
(71) Anmelder: MANNESMANN Aktiengesellschaft, 40213 Düsseldorf (DE)
(72) Erfinder: Kröll, Joachim, 41363 Jüchen (DE); Franzen, Hermann, Dipl.-Ing., 41238 Mönchengladbach (DE); Brandtner, Rita, 40595 Düsseldorf (DE)
(74) Vertreter: Henze, Lothar

(57) **Zusammenfassung**

Die Erfindung betrifft eineVorrichtung zum Horizontal-Umschlag von genormten Transportbehältern, wie Container, Wechselbehälter oder dergleichen zwischen zwei Be- und Entladestationen, insbesondere zwischen Schienen - und Straßenfahrzeugen in Terminals, mit Vertikalhubeinrichtungen zum Abheben der Transportbehälter von der jeweiligen Ladefläche und Einrichtungen zum Umsetzen der Transportbehälter quer zu ihrer Längsachse mittels die Be- und Entladestationen verbindender Horizontal-Ladeeinrichtungen.
Die Erfindung ist dadurch gekennzeichnet,daß die Vertikalhubeinrichtungen als quer zur Fahrzeuglängsachse in die Ladefläche (1) der Schienen- und Straßenfahrzeuge (8) eingelassene, die Transportbehälter (7) untergreifende Hubbrücken (2, 3.1, 3.2) ausgebildet sind und daß zwischen den Be- und Entladestationen ein Querfördergerät (4) vorgesehen ist, an dem die Horizontalladeeinrichtung mit zum Untergreifen der Transportbehälter (7) horizontal und quer zum Schienen- und Straßenfahrzeug (8) in den Bereich derer Ladeflächen (1) ausfahrbaren teleskopartigen Tragarmen (5, 6.1) und (6.2) angeordnet ist.

## Beschreibung

Die Erfindung betrifft eine Vorrichtung zum Horizontal-Umschlag von genormten Transportbehältern, wie Container, Wechselbehälter oder dergleichen zwischen zwei Be- und Entladestationen, insbesondere zwischen Schienen - und Straßenfahrzeugen in Terminals, mit Vertikalhubeinrichtungen zum Abheben der Transportbehälter von der jeweiligen Ladefläche und Einrichtungen zum Umsetzen der Transportbehälter quer zu ihrer Längsachse mittels die Be- und Entladestationen verbindender Horizontalladeeinrichtungen.

Eine gattungsgemäße Vorrichtung zum Umsetzen von Wechselbehältern zwischen zwei Stationen, z.B. einem Straßenfahrzeug und einem Schienenfahrzeug, sieht vor, den Wechselbehälter quer zu seiner Längsachse über Umsetzschienen von der einen Station zur anderen zu bewegen. Zu diesem Zweck wird der Wechselbehälter in der einen Station, beispielsweise einem Fahrzeug, angehoben. An der Unterseite des Wechselbehälters vorgesehene Verschiebeelemente werden ausgefahren. Je nach Bedarf werden zwischen den beiden Stationen oder auch in den Stationen die Umsetzschienen manuell ausgelegt, in denen die Verschiebeelemente geführt werden können und die nach dem Umsetzen des Wechselbehälters ebenfalls manuell wieder entfernt werden. Als Verschiebeelemente werden beim Stand der Technik an den. Wechselbehältern angeordnete Rollen oder Gleitelemente vorgeschlagen; in einer anderen Ausgestaltung der gattungsgemäßen Lösung wird eine Art Schreitantrieb erläutert, mit dem die Wechselbehälter über die Umsetzschienen befördert werden.

Es sind auch bereits Verfahren und Vorrichtungen vorgeschlagen worden, bei denen große Behälter, wie Container, direkt von einer Station auf eine unmittelbar daneben befindliche zweite Station, die mit der ersten fest verbunden wird, umgeladen werden. So lassen sich beispielsweise Straßenfahrzeuge und Schienenfahrzeuge direkt aneinander koppeln, um ein solches Umsetzen zu ermöglichen, wie es in der DE-OS 38 33 942 beschrieben ist.

Ein besonderes Problem beim Horizontal-Umschlag von Lasten ergibt sich dann, wenn der Umschlag Schiene-Straße unter dem Fahrdraht einer elektrifizierten Bahnstrecke in kürzester Zeit zu erfolgen hat, um die Totzeiten der Transportmittel so gering wie möglich zu halten. Manuelle Arbeiten sind zeitaufwendig und unfallträchtig. Die Transportbehälter sollen deshalb möglichst direkt von einem Fahrzeug auf das andere überführt werden, gelegentlich aber auch an konventionelle Ladeeinrichtungen (Stapler, Highstacker) übergeben werden können.

Aufgabe der vorliegenden Erfindung ist es, eine kostengünstige Vorrichtung zum Horizontal-Umschlag von genormten Transportbehältern zu schaffen, mit der ein sehr kurzzeitiges Umschlagen der Lasten, auch unter Fahrdrähten und gegebenenfalls im teil- oder vollautomatischen Betrieb möglich ist.

Zur Lösung der Aufgabe wird erfindungsgemäß eine Weiterentwicklung einer gattungsgemäßen Vorrichtung geschaffen, die dadurch gekennzeichnet ist, daß die Vertikalhubeinrichtungen als quer zur Fahrzeuglängsachse in die Ladefläche der Schienen- und Straßenfahrzeuge eingelassene, die Transportbehälter untergreifende Hubbrücken ausgebildet sind und daß zwischen den Be- und Entladestationen ein Querfördergerät vorgesehen ist, an dem die Horizontalladeeinrichtung mit zum Untergreifen der Transportbehälter horizontal und quer zum Schienen- und Straßenfahrzeug in den Bereich derer Ladeflächen ausfahrbaren teleskopartigen Tragarmen angeordnet ist.

Eine derart gestaltete Vorrichtung ermöglicht in einer einfachen kostengünstigen Lösung den Horizontal-Umschlag von Containern, Wechselbehältern oder dergleichen, insbesondere zwischen Schienenfahrzeugen und Straßenfahrzeugen unter Zwischenschaltung eines Querfördergerätes, an dem die Einrichtungen zum Überführen der Transportbehälter vom einen zum anderen Fahrzeug angeordnet sind.

Das Querfördergerät selbst ist stationär zur behälterweisen Be- und Entladung oder nach einem günstigen Gedanken der Erfindung als Fahrzeug mit oder ohne Eigenantrieb ausgebildet, wobei die Tragarme beidseitig aus den Führungen am Querfördergerät ausfahrbar sind. Durch die beidseitige Ausfahrbarkeit der Tragarme kann die von dem einen Fahrzeug aufgenommene Last unmittelbar, d.h. ohne sie zwischendurch auf dem Querfördergerät abzusetzen, auf das andere Fahrzeug überführt werden, wenn beide Fahrzeuge zueinander ausgerichtet beidseitig des Querfördergerätes sich gegenüberstehen.

Nach einem besonderen Merkmal der Erfindung sind die als Teil des Schienen- und Straßenfahrzeuges ausgebildeten Hubbrücken mittels unterhalb der Ladefläche angelenkter Hydraulikzylinder synchron anhebbar. Damit wird der notwendige Raum für die die Transportbehälter untergreifenden Tragarme geschaffen, mit denen die Transportbehälter quer zum Schienen- und Straßenfahrzeug verfahrbar sind.

Günstigerweise bestehen die Tragarme aus zwei Tragarmteilen, wobei das am Querfördergerät teleskopartig ausfahrbare Grundtragarmteil als Fahrschiene für das als Auflage für den Transportbehälter ausgebildete zweite Tragarmteil gestaltet ist, das mit Laufrollen in dem seinerseits an Führungsrollen am Querfördergerät geführten Grundtragarmteil geführt ist. Durch diesen Vorschlag entfallen manuell umsetzbare Überführungseinrichtungen in Form von Umsetzschienen oder dergleichen, weil die Schienen in Form des Grundtragarmteils selbst als Teil des Querfördergerätes dort fest installiert sind und kurzzeitig verfügbar sind. Es entfallen auch die am Transportbehälter nach dem Stand der Technik vorgesehenen Räder oder Kufen, weil diese ebenfalls Teil des Querfördergerätes sind. Dazu wird das zweite Tragarmteil in dem ersten Grundtragarmteil verfahren, wozu das zweite Tragarmteil mit Rollen oder Rädern versehen ist, und das erste Teil als Fahrschiene gestaltet ist.

Die Tragarme sind in einer Ausgestaltung der Erfindung mit Linearantrieben verbunden, die bekannterweise als Kolben-Zylindereinheiten, als Zahnstange mit Ritzel oder als Zugketten ausgebildet sein können.

In einer günstigen Weiterbildung der Erfindung ist vorgesehen, daß die jeweils eine Hälfte jedes Eckbeschlages des Transportbehälters von der zugeordneten Hubbrücke und die andere Hälfte jedes Eckbeschlages von dem zugeordneten Tragarm untergreifbar ist. Beide den Transportbehälter tragenden Bauteile sind somit in dem verstärkten Eckbereich des Transportbehälters angeordnet und untergreifen diesen im Bereich des Eckbeschlages.

Die erfindungsgemäße Vorrichtung eignet sich zum gleichzeitigen Be- und Entladen von Güterzügen, von Transportbehältern, wenn mehrere hintereinander auf Fahrschienen angeordnete Querfördergeräte vorgesehen werden.

Mit der erfindungsgemäßen Vorrichtung zum Horizontal-Umschlag von Lasten wird eine einfache und funktionssichere Vorrichtung zum Be- und Entladen von Schienen- und Straßenfahrzeugen, auch unter Fahrdrähten geschaffen, bei der genormte Transportbehälter zum Einsatz kommen. Das Be- und Entladen erfolgt in kürzester Zeit, wobei die Vorrichtung ohne Probleme automatisierbar ist.

Ein Ausführungsbeispiel der Erfindung ist in der Zeichnung dargestellt und wird nachfolgend beschrieben. Es zeigt:
- Figur 1: die Draufsicht auf die Ladefläche eines Schienenfahrzeuges und das daneben angeordnete Querfördergerät,
- Figur 2: einen Querschnitt durch eine erfindungsgemäße Vorrichtung mit einem Transportbehälter auf einem Schienenfahrzeug,
- Figur 3: einen Querschnitt durch einen Transportbehälter im Bereich des Eckbeschlages und die Hubbrücke,
- Figur 4: eine um 90° gedrehte Ansicht nach Figur 3,
- Figur 5: den Beginn des Horizontal-Umschlages eines Transportbehälters,
- Figur 6: einen Querschnitt durch den Transportbehälter im Bereich des Eckbeschlages,
- Figur 7: das Absetzen des Transportbehälters auf dem Tragarm,
- Figur 8: einen Querschnitt durch den Transportbehälter im Bereich des Eckbeschlages,
- Figur 9: den Transportbehälter auf dem Querfördergerät und
- Figur 10: den auf dem Straßenfahrzeug abgesetzten Transportbehälter.

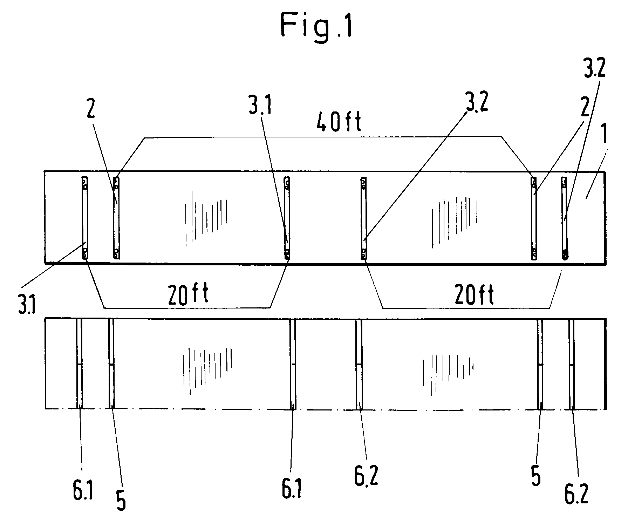

In Figur 1 ist grob schematisch eine Draufsicht auf die Ladefläche 1 eines Schienentransportfahrzeuges dargestellt, auf dem, eingelassen in die Ladefläche 1 in den zu transportierenden Behältern 7 entsprechenden Abständen Hubbrücken 2 für 40 ft ISO-Container und Hubbrücken 3.1 und 3.2 für 20 ft ISO-Container und Wechselbehälter vorgesehen sind. In der unteren Zeichnungshälfte ist das neben dem Schienenfahrzeug angeordnete Querfördergerät ebenfalls in der Draufsicht dargestellt, wobei quer zum Schienentransportfahrzeug an dem Querfördergerät geführte Tragarme 5, 6.1 und 6.2 zu erkennen sind. Diese Tragarme stehen in ihrer neutralen Position, d.h. innerhalb der Umrisse des Querfördergerätes.

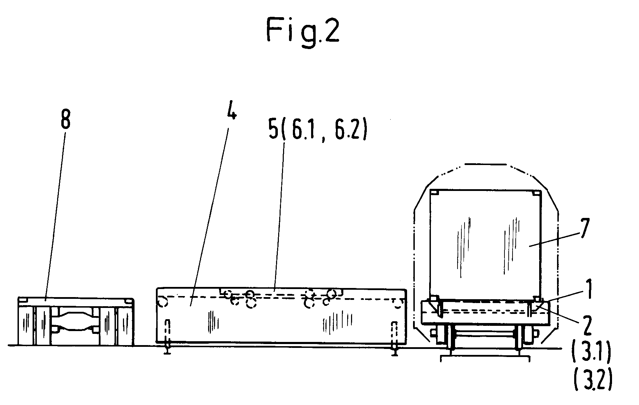

In Figur 2 ist in einem Querschnitt durch die erfindungsgemäße Vorrichtung in der rechten Zeichnungshälfte das Lichtraumprofil eines Schienenfahrzeuges erkennbar, auf dem der Transportbehälter 7 auf der Ladefläche 1 abgesetzt ist. Der Transportbehälter 7 ist während des Transportes auf der Ladefläche 1 in nicht dargestellter Weise gesichert.

Ebenfalls in Figur 2 erkennbar ist eine von mehreren unterhalb des Transportbehälters 7 und in die Ladefläche 1 des Schienenfahrzeuges eingelassenen Hubbrücken 2, 3.1, 3.2 die mittels Kolben-Zylindereinheiten anhebbar sind.

Seitlich neben dem Schienenfahrzeug mit dem Transportbehälter 7 ist das erfindungsgemäße Querfördergerät 4 dargestellt, in dem quer zum Schienenfahrzeug und ebenfalls quer zu dem auf der anderen Seite des Querfördergerätes 4 stehenden Straßenfahrzeug 8 die Tragarme 5, 6.1, 6.2 verschiebbar geführt sind. Das Querfördergerät 4 selbst ist auf Schienen parallel zu den beiden benachbarten Fahrzeugen verfahrbar.

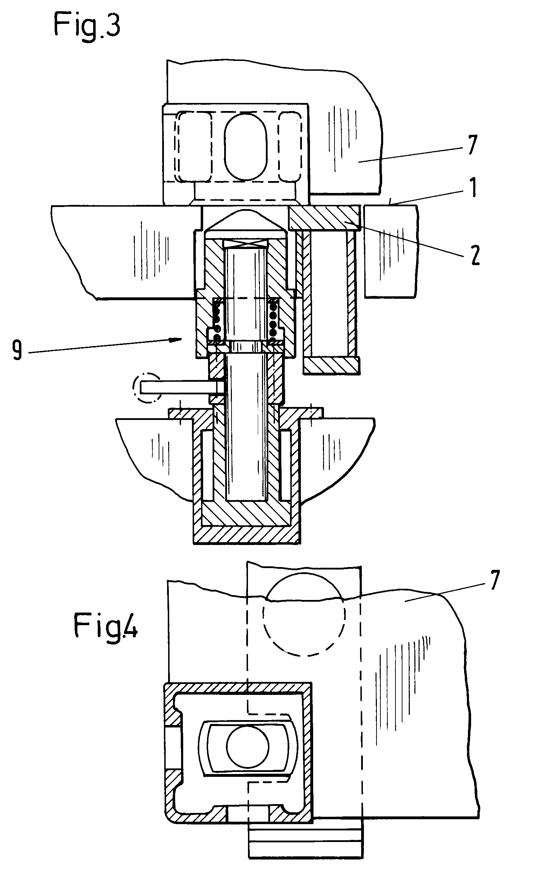

Wie in Figuren 3 und 4 in einem Schnitt durch den Transportbehälter 7 im Bereich seines Eckbeschlages zu erkennen ist, wird dieser Eckbeschlag zu einer Hälfte (Figur 4) von der Hubbrücke 2 untergriffen, wobei in der Hubbrücke eine Ausnehmung für die nicht zum Gegenstand der Erfindung gehörende Verriegelung 9 vorgesehen ist.

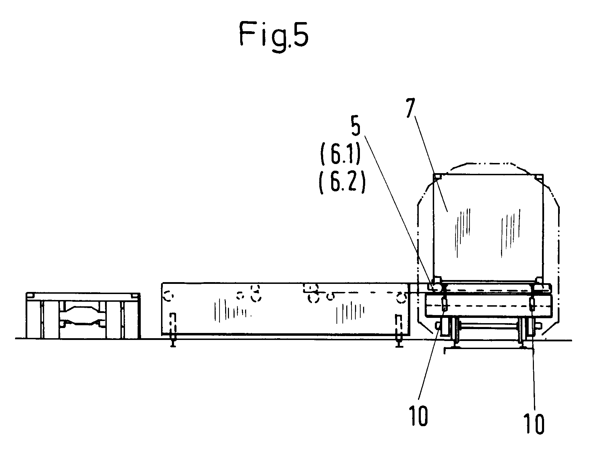

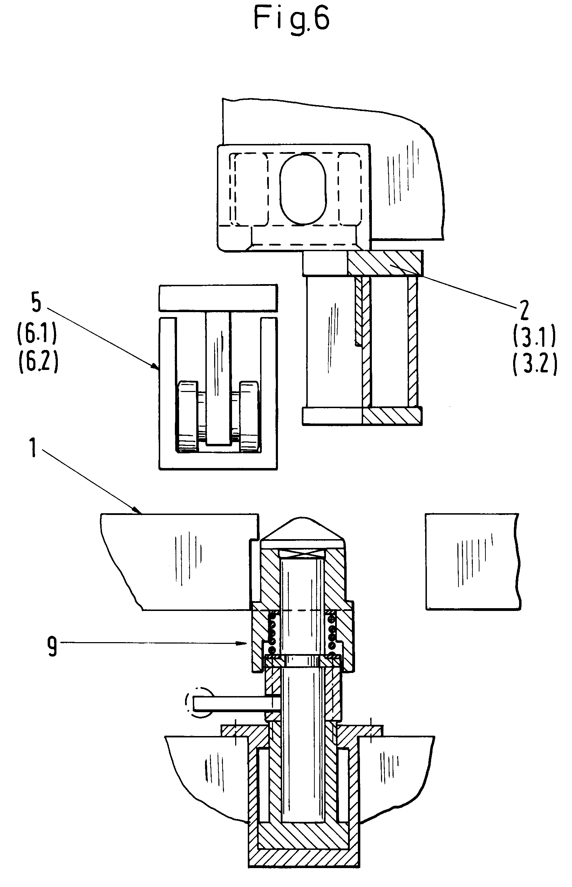

In Figur 5 ist gezeigt, wie mit Hilfe der im Gleichlauf betrieben Hubzylinder 10 die. Hubbrücke 2 angehoben und damit der Transportbehälter 7 von der Ladefläche 1 des Schienenfahrzeuges abgehoben wird. Gleichzeitig fahren die Tragarme 5, 6.1, 6.2, je nachdem welche Art Transportbehälter zu transportieren ist, seitlich aus dem Querfördergerät 4 heraus unter den angehobenen Transportbehälter 7, wie es in Figur 6 in vergrößerter Darstellung erkennbar ist. Ersichtlich liegt die Hälfte des Eckbeschlages auf der angehobenen Hubbrücke 2 auf, während die andere Hälfte oberhalb der Tragarme 5, 6.1 und 6.2 verbleibt. Die Verriegelungseinrichtung 9 ist unter die Ladefläche 1 zurückgezogen, so daß der für das Handling des Transportbehälters nötige Freiraum vorhanden ist.

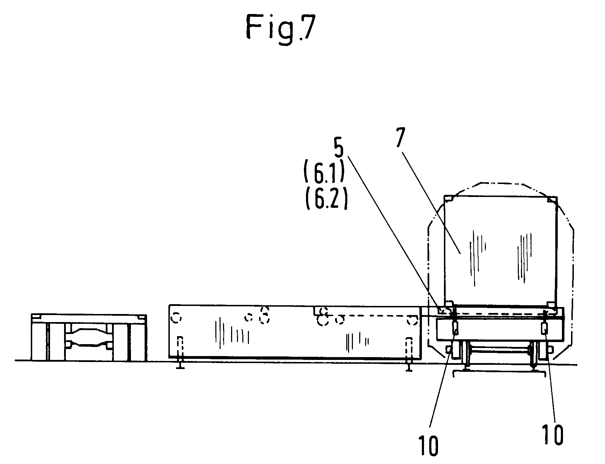

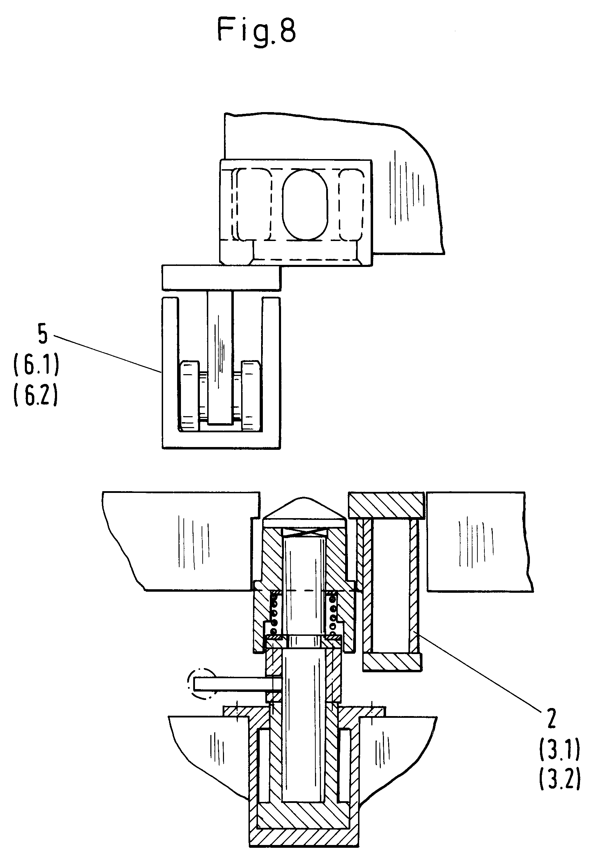

In Figur 7 ist der Transportbehälter 7 erkennbar durch Einfahren der Kolben-Zylindereinheiten 10 abgesenkt worden und liegt nun, wie in Figur 8 erkennbar, mit der anderen Hälfte des Eckbeschlages auf den Tragarmen 5, 6.1 und 6.2 auf. Jeder Tragarm ist zweigeteilt und besteht aus dem Grundtragarmteil, das im Querfördergerät 4 selbst verschiebbar an Rollen geführt ist und dem zweiten Tragarmteil, das seinerseits auf Rollen in dem Grundtragarmteil längsverschiebbar geführt ist. In Figur 8 ist ebenfalls erkennbar, daß die Hubbrücke nunmehr in eine Ruheposition unterhalb der Ladefläche 1 des Schienenfahrzeuges unmittelbar neben der Verriegelungseinrichtung abgesenkt ist.

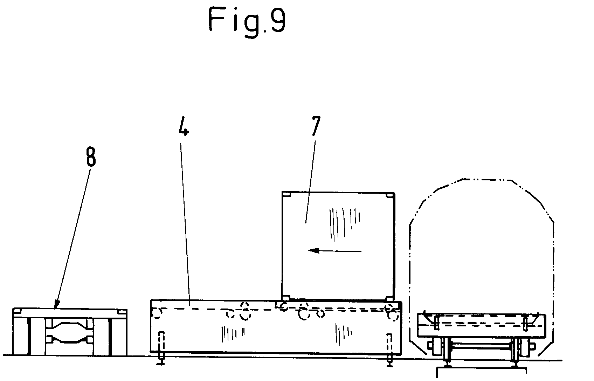

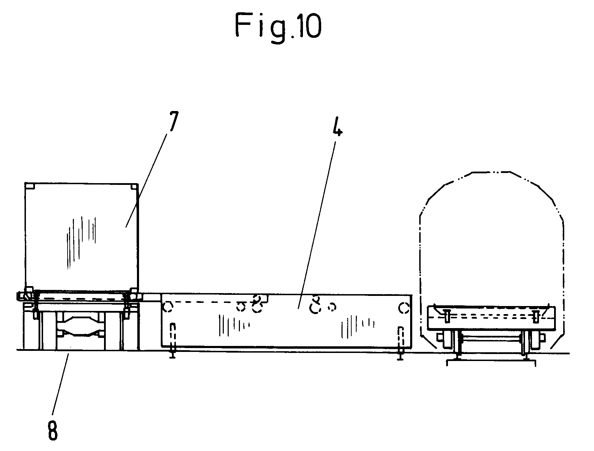

In Figur 9 ist der Transportbehälter 7 durch Verschieben der Tragarme 5, 6.1 und 6.2 in ihren Längserstreckungsrichtungen von dem Schienenfahrzeug auf das Querfördergerät übernommen worden, von wo aus der Transportbehälter 7 in Pfeilrichtung sofort weitertransportiert wird, um ihn an das auf der anderen Seite des Querfördergerätes 4 positionierte Straßenfahrzeug 8 zu übergeben. In Figur 10 ist erkennbar der Transportbehälter 7 auf dem Straßenfahrzeug abgelegt, nachdem er von den heb- und senkbaren Hubbrücken 2, 3.1, 3.2 die in der Ladefläche 1 des Straßenfahrzeuges angeordnet sind, übernommen und auf die Ladefläche abgesenkt wurde. Dort erfolgt in konventioneller Weise eine Verriegelung des Transportbehälters.

Die Tragarme 5, 6.1 und 6.2 werden vor dem Absetzen des Behälters in ihre Ruhestellung innerhalb der Konturen des Querfördergerätes 4 zurückgezogen und dort bis zum nächsten Einsatz verwahrt.

## Patentansprüche

1. Vorrichtung zum Horizontal-Umschlag von genormten Transportbehältern, wie Container, Wechselbehälter oder dergleichen zwischen zwei Be- und Entladestationen, insbesondere zwischen Schienen - und Straßenfahrzeugen in Terminals, mit Vertikalhubeinrichtungen zum Abheben der Transportbehälter von der jeweiligen Ladefläche und Einrichtungen zum Umsetzen der Transportbehälter quer zu ihrer Längsachse mittels die Be- und Entladestationen verbindender Horizontalladeeinrichtungen,
dadurch gekennzeichnet,
daß die Vertikalhubeinrichtungen als quer zur Fahrzeuglängsachse in die Ladefläche (1) der Schienen- und Straßenfahrzeuge (8) eingelassene, die Transportbehälter (7) untergreifende Hubbrücken (2, 3.1, 3.2) ausgebildet sind und daß zwischen den Be- und Entladestationen ein Querfördergerät (4) vorgesehen ist, an dem die Horizontalladeeinrichtung mit zum Untergreifen der Transportbehälter (7) horizontal und quer zum Schienen- und Straßenfahrzeug (8) in den Bereich derer Ladeflächen (1) ausfahrbaren teleskopartigen Tragarmen (5, 6.1) und (6.2) angeordnet ist.

2. Vorrichtung zum Horizontal-Umschlag von genormten Transportbehältern nach Anspruch 1,
dadurch gekennzeichnet,
daß das Querfördergerät (4) als Fahrzeug mit oder ohne Eigenantrieb ausgebildet ist und die Tragarme (5, 6.1) und (6.2) beidseitig aus Führungen am Querfördergerät (4) ausfahrbar sind.

3. Vorrichtung zum Horizontal-Umschlag von genormten Transportbehältern nach Anspruch 1,
dadurch gekennzeichnet,
daß die Hubbrücken (2, 3.1, 3.2) mittels unterhalb der Ladefläche (1) der Schienen - und Straßenfahrzeuge (8) angelenkter Hydraulikzylinder (10) synchron anhebbar sind.

4. Vorrichtung zum Horizontal-Umschlag von genormten Transportbehältern nach Anspruch 1,
dadurch gekennzeichnet,
daß die Tragarme (5, 6.1) und (6.2) aus zwei Tragarmteilen bestehen, wobei das am Querfördergerät (4) teleskopartig ausfahrbare Grundtragarmteil als Fahrschiene für das als Auflage für den Transportbehälter (7) ausgebildete zweite Tragarmteil gestaltet ist, das mit Laufrollen in dem seinerseits an Führungsrollen am Querfördergerät (4) geführten Grundtragarmteil geführt ist.

5. Vorrichtung zum Horizontal-Umschlag von genormten Transportbehältern nach Anspruch 1 und 4,
dadurch gekennzeichnet,
daß die Tragarme (5, 6.1 und 6.2) mit Linearantrieben verbunden sind.

6. Vorrichtung zum Horizontal-Umschlag von genormten Transportbehältern nach einem der Ansprüche 1 bis 5,
dadurch gekennzeichnet,
daß jeweils eine Hälfte jedes Eckbeschlages der Transportbehälter (7) von der zugeordneten Hubbrücke (2, 3.1, 3.2) und die andere Hälfte jedes Eckbeschlages von dem zugeordneten Tragarm (5, 6.1 und 6.2) untergreifbar ist.

7. Vorrichtung zum Horizontal-Umschlag von genormten Transportbehältern nach einem der Ansprüche 1 bis 6,
dadurch gekennzeichnet,
daß zum gleichzeitigen Be- und Entladen von Güterzügen mehrere hintereinander auf Fahrschienen angeordnete Querfördergeräte (4) vorgesehen sind,
